# EUROPÄISCHE PATENTSCHRIFT

(11) **EP 3 865 437 B1**
(45) Veröffentlichungstag und Bekanntmachung des Hinweises auf die Patenterteilung: **22.05.2024**
(21) Anmeldenummer: 21152258.6
(22) Anmeldetag: 19.01.2021
(51) Int. Cl.: B65H 31/30, B65H 31/34, B25J 15/00, B25J 15/02, B65G 47/248

(54) **VERFAHREN ZUM BEWEGEN EINES PRODUKTSTAPELS MIT EINEM ROBOTER**
METHOD FOR MOVING A PRODUCT STACK WITH A ROBOT
PROCÉDÉ DE DÉPLACEMENT D'UN EMPILEMENT DE PRODUITS À L'AIDE D'UN ROBOT

(30) Priorität: 11.02.2020 DE 102020103400
(43) Veröffentlichungstag der Anmeldung: 18.08.2021
(73) Patentinhaber: Heidelberger Druckmaschinen AG, 69115 Heidelberg (DE)
(72) Erfinder: Ackermann, Herbert, 71634 Ludwigsburg (DE); Ganter, Udo, 71691 Freiberg am Neckar (DE); Haupt-Terlau, Martin, 71729 Erdmannhausen (DE); Joachim Krumma,, 74385 Pleidelsheim (DE); Lubberger, Gerhard, 71711 Steinheim (DE)

(56) Entgegenhaltungen:
- EP-A1- 2 128 056
- JP-A- S6 048 848
- US-A- 5 193 973
- US-A1- 2004 240 979
- US-A1- 2008 175 702

## Beschreibung

### Erfindung

Die Erfindung betrifft ein Verfahren mit den Merkmalen des Oberbegriffs von Anspruch 1.

Die Erfindung liegt auf dem technischen Gebiet der grafischen Industrie und dort insbesondere im Bereich des Handhabens (z.B. Greifen, Halten, Bewegen, Drehen, Wenden und/oder Ablegen) von Produktstapeln aus bevorzugt bedruckten und gefalzten flachen Produkten, bevorzugt aus Papier, Karton, Pappe, Kunststoff, Metall oder Verbundmaterial, mit einem Manipulator, insbesondere einem Roboter oder einem Gelenkarmroboter.

### Stand der Technik

Es ist bekannt, Produktstapel, z.B. gefalzte Signaturen, von der Auslage einer Weiterverarbeitungsmaschine, z.B. einer Falzmaschine, händisch zu einer Palette zu transportieren und dort nach einem bekannten Absetzschema abzusetzen. Diese Tätigkeit stellt eine hohe körperliche Arbeitsbelastung dar, da etwa vier bis fünf Produktstapel pro Minute bewegt werden müssen. Es ist auch bekannt, hierzu einen Roboter mit einem Gelenkarm einzusetzen: beispielhaft sei das Produkt "CoBo-Stack" der Firma MBO Maschinenbau Oppenweiler Binder GmbH & Co. KG in Oppenweiler, Deutschland, genannt.

Die JPS6048848A offenbart in Figur 11d das Greifen an diagonal gegenüber liegenden Ecken eines Produktstapels und in Figur 9 das Durchhängen des Produktstapels. Die beiden gezeigten Greifer gehören dabei zu zwei separaten Robotern.

Die US2006263196A1 offenbart das Drehen und das Wenden eines Stapels mit einem Roboter-Greifer.

Die EP1645434B1 offenbart das Verschwenken eines Produktstapels in eine stehende Lage und das Überführen des Produktstapels an eine Klammer bzw. das Greifen des Produktstapels von oben.

Die EP2128056A1 offenbart einen Roboter mit einem Gelenkarm zum Handhaben eines Stapels und in Figur 4 eine Greifeinrichtung.

Die DE202019106975U1 offenbart eine Handhabungseinrichtung zum Übergeben eines Produktstapels, wobei die Handhabungsreinrichtung eine Greifeinrichtung umfasst, die in drei Dimensionen bewegbar ist. Die Greifeinrichtung umfasst ein erstes und zweites seitliches Begrenzungselement sowie ein entlang je eines Begrenzungselementes linear verschiebbar gelagertes, oberes und unteres Halteelement.

Die US2008/0175702A1 offenbart ein gattungsgemäßes Verfahren, d.h. ein Verfahren mit den Merkmalen des Oberbegriffs von Anspruch 1.

### Aufgabe

Es ist eine Aufgabe der vorliegenden Erfindung, eine Verbesserung gegenüber dem Stand der Technik zu schaffen, welche es insbesondere ermöglicht, Produktstapel automatisiert zu bewegen und insbesondere gewendet oder ungewendet abzusetzen.

### Erfindungsgemäße Lösung

Diese Aufgabe wird erfindungsgemäß durch ein Verfahren nach Anspruch 1 gelöst.

Vorteilhafte und daher bevorzugte Weiterbildungen der Erfindung ergeben sich aus den Unteransprüchen sowie aus der Beschreibung und den Zeichnungen.

Ein erfindungsgemäßes Verfahren zum Bewegen eines Produktstapels mit einem Roboter, wobei der Roboter einen Gelenkarm und am Gelenkarm angeordnet wenigstens einen Greifer für den Produktstapel umfasst, wobei der Produktstapelwahlweise gewendet wird, wobei das Bewegen an einer ausgewählten Absetzposition von mehreren Absetzpositionen eines vorgegebenen Absetzschemas endet und wobei der Produktstapel an der ausgewählten Absetzposition auf eine Unterlage abgesetzt wird, zeichnet sich dadurch aus, dass der Produktstapel derart gehalten wird, dass der Produktstapel diagonal durchhängt und dass beim Absetzen des diagonal durchhängenden Produktstapels zunächst der Durchhang die Unterlage berührt

Die Erfindung ermöglicht es in vorteilhafter Weise, Produktstapel automatisiert zu bewegen und insbesondere gewendet oder ungewendet abzusetzen.

Der Produktstapel wird erfindungsgemäß und vorteilhafter Weise zu einer ausgewählten Absetzposition von mehreren Absetzpositionen eines vorgegebenen Absetzschemas bewegt und dort bevorzugt abgesetzt.

Das Absetzschema kann in einem Digitalrechner oder einem mit diesem verbundenen Netzwerk gespeichert sein. Es kann eine Mehrzahl von Absetzschemata gespeichert sein, z.B. in einer Datenbank. Die Auswahl der Absetzposition (und/oder einer Abfolge von Absetzpositionen für aufeinander folgend zu bewegende Produktstapel) kann rechnergesteuert erfolgen. Beim Aufbau eines Transportstapels aus Produktstapeln kann für jede horizontale Lage ein Absetzschema gewählt werden, insbesondere können für zwei aufeinander folgende Lagen unterschiedliche Absetzschemata gewählt werden.

Der Begriff "wahlweise" meint, dass der Produktstapel entweder gewendet wird oder nicht gewendet wird. Die Wahl kann bevorzugt durch einen Digitalrechner erfolgen und kann von dem Digitalrechner insbesondere in Abhängigkeit von einem sogenannten Absetzmuster getroffen werden. Der Begriff "wahlweise" soll auch verdeutlichen, dass das Verfahren mit je einem Produktstapel mehrfach nacheinander durchgeführt werden kann und dass dabei wenigstens ein Produktstapel gewendet wird und wenigstens ein Produktstapel nicht gewendet wird.

Erfindungsgemäß ist vorgesehen, dass der Produktstapel derart gehalten wird, dass der Produktstapel diagonal durchhängt. Hierdurch kann der Produktstapel mit der Diagonale als "tiefstem Punkt" kontrolliert und sich selbst fixierend abgesetzt werden. Der Produktstapel kann hierzu an diagonal gegenüberliegenden Ecken gehalten werden.

Der Abstand von Greifern des Roboters kann bis zu einem gewünschten oder vorgegebenen Durchhang bevorzugt rechnergesteuert verringert werden.

### Weiterbildungen

Im Folgenden werden bevorzugte Weiterbildungen der Erfindung (kurz: Weiterbildungen) beschrieben.

Eine Weiterbildung kann sich dadurch auszeichnen, dass das Absetzschema in einem Digitalrechner gespeichert ist oder über ein Netzwerk von einem anderen Digitalrechner auf den Digitalrechner geladen wird und dass das Bewegen durch den Digitalrechner gesteuert wird.

Eine Weiterbildung kann sich dadurch auszeichnen, dass das Absetzschema vom Digitalrechner in Abhängigkeit von wenigstens einem der folgenden Parameter berechnet und/oder ausgewählt wird: Abmessungen des Produktstapels; Abmessungen der Unterlage; im Falle von gefalzten Produkten gebildeter Produktstapel: Lage der Falzkanten relativ zur Unterlage und/oder Aufbau der Falzkanten in Abhängigkeit von der Falzart.

Eine Weiterbildung kann sich dadurch auszeichnen, dass nacheinander mehrere Produktstapel bewegt, wahlweise gewendet, wahlweise in der Horizontalen gedreht und an jeweils ausgewählten Absetzpositionen von mehreren Absetzpositionen des vorgegebenen Absetzschemas abgesetzt werden. Dabei kann ein rechnergesteuerter Roboter mit einem Gelenkarm und einer Greifeinrichtung zum Einsatz kommen.

### Spezielle Weiterbildungen hinsichtlich des Schwenkens

Eine Weiterbildung kann sich dadurch auszeichnen, dass der Produktstapel um einen effektiven Winkel α1 < > 180° geschwenkt wird und dass der Produktstapel anschließend um einen effektiven Winkel α2 = 180° - α1 geschwenkt oder um einen effektiven Winkel α2 = - α1 zurückgeschwenkt wird.

Der Produktstapel wird vorteilhafter Weise in zwei Schritten geschwenkt und dabei wahlweise gewendet. Im ersten Schritt erfolgt ein Schwenken um einen effektiven Winkel α1 < > 180°. Im zweiten Schritt erfolgt ein Schwenken um einen effektiven Winkel α2 = 180° - α1. Sind α1 und α2 z.B. beide 90°, so erfolgt ein Wenden um 180°. Sind α1 und α2 z.B. 90° und -90°, so erfolgt kein Wenden.

Das 2-Schritt-Schwenkverfahren ermöglicht es in vorteilhafter Weise Zwischenschritte einzufügen, z.B. ein Rütteln und/oder Geradstoßen des Produktstapels. Weiterhin ermöglicht es das 2-Schritt-Schwenkverfahren in vorteilhafter Weise, die beiden Schritte an verschiedenen Positionen durchzuführen, z.B. indem der Roboter zwischendurch eine Bewegung ausführt. Weiterhin ermöglicht es das 2-Schritt-Schwenkverfahren in vorteilhafter Weise, die beiden Schritte unter Einsatz verschiedener Vorrichtungen durchzuführen, z.B. unter Einsatz des Roboters und unter Einsatz einer vom Roboter verschiedenen Schwenkeinrichtung.

Der Begriff "effektiver Winkel" soll verdeutlichen, dass der Winkel unabhängig von der Art des Schwenkens ist. Ein effektiver Winkel von +90° kann demnach z.B. durch Schwenken um +90°, durch zweimaliges Schwenken um je +45° oder durch Schwenken um -270° erreicht werden. Anstatt "effektiver Winkel" kann auch einfach der Begriff "Winkel" verwendet werden.

Eine Weiterbildung kann sich dadurch auszeichnen, dass das Schwenken um den effektiven Winkel α1 mit einer vom Roboter verschiedenen Schwenkeinrichtung erfolgt. Die Schwenkeinrichtung kann einem Ausleger einer Weiterverarbeitungsmaschine, insbesondere einer Falzmaschine, zugeordnet und insbesondere an diesem angeordnet sein. Sie kann einen schwenkbaren Greifer für den Produktstapel umfassen. Die Schwenkeinrichtung kann von einem Digitalrechner gesteuert sein. Die Schwenkeinrichtung schwenkt den Produktstapel bevorzugt um α1 = 90°.

Eine Weiterbildung kann sich dadurch auszeichnen, dass das Schwenken um den effektiven Winkel α1 vor dem Bewegen erfolgt bzw. das Bewegen startet aus der geschwenkten Lage des Produktstapels heraus. Das Bewegen erfolgt bevorzugt mit dem Roboterarm.

Eine Weiterbildung kann sich dadurch auszeichnen, dass das Schwenken um den effektiven Winkel α1 um eine horizontale Achse erfolgt. Die Achse kann parallel zur Transportrichtung eines Auslegers einer Weiterverarbeitungsmaschine, insbesondere einer Falzmaschine, ausgerichtet sein. Vor dem Schwenken wird der Produktstapel bevorzugt ergriffen und gehalten.

Eine Weiterbildung kann sich dadurch auszeichnen, dass der Produktstapel beim Schwenken um den effektiven Winkel α1 aus einer horizontalen Lage herausgeschwenkt wird. In der horizontalen Lage liegen die einzelnen Produkte des Produktstapels, z.B. gefalzte Signaturen, bevorzugt horizontal.

Eine Weiterbildung kann sich dadurch auszeichnen, dass der Produktstapel beim Schwenken um den effektiven Winkel α1 in eine vertikale Lage hineingeschwenkt wird. In der vertikalen Lage "stehen" die einzelnen Produkte des Produktstapels bevorzugt.

Eine Weiterbildung kann sich dadurch auszeichnen, dass der Produktstapel außerhalb der horizontalen Lage ausgerichtet und/oder in einer Richtung geradgestoßen und/oder in zwei zueinander senkrechten Richtungen geradgestoßen und/oder gerüttelt und/oder belüftet wird und/oder dass ein aufgefächerter Produktstapel in einen nicht aufgefächerten Produktstapel verändert wird ("entfächern"). Währenddessen kann sich der Produktstapel in der Schwenkeinrichtung befinden, z.B. in deren Greifer. Der Greifer kann dabei leicht geöffnet sein, insbesondere für das Belüften. Eine Einrichtung für das Geradstoßen und/oder Entfächern kann zwei zueinander bewegliche, senkrecht stehende Flächen z.B. Bleche, bevorzugt mit seitlichen Abkantungen, umfassen. Diese Einrichtung kann vor dem Schwenken geöffnet sein und nach dem Schwenken geschlossen sein. Hierzu können die Flächen voneinander weg und aufeinander zu bewegt werden. Für das Rütteln können Pneumatikzylinder vorgesehen sein. Abschließend fährt die Einrichtung bzw. deren Flächen bevorzugt in eine offene Position, so dass der Produktstapel übernommen werden kann.

Eine Weiterbildung kann sich dadurch auszeichnen, dass der Produktstapel in der vertikalen Lage um eine vertikale Achse gedreht wird, bevorzugt um 180°. Dies ermöglicht es in vorteilhafter Weise, den Produktstapel in der vertikalen Lage sowohl beim wahlweisen Wenden als auch beim wahlweisen Nichtwenden von derselben Seite her zu ergreifen. Das Drehen kann mit der Schwenkeinrichtung erfolgen. Diese kann hierzu einen Drehantrieb umfassen. Der Drehantrieb kann von einem Digitalrechner gesteuert sein.

Eine Weiterbildung kann sich dadurch auszeichnen, dass die Übernahme des Produktstapels im Falle des Wendens von einer Seite des Produktstapels her erfolgt und dass die Übernahme des Produktstapels im Falle des Nichtwendens von derselben Seite des Produktstapels her erfolgt. Das Übernehmen von der einen oder der anderen Seite her kann mit einem Gelenkarm des Roboters durchgeführt werden. Die Auswahl der Seite kann rechnergesteuert erfolgen. Dabei kann ein vorgegebenes Absetzschema berücksichtigt werden.

Eine Weiterbildung kann sich dadurch auszeichnen, dass der Roboter den Produktstapel in der vertikalen Lage übernimmt. Der Roboter und insbesondere dessen Greifer kann hierzu rechnergesteuert an den Produktstapel heranbewegt werden, z.B. von oben und/oder von einer Seite her.

Eine Weiterbildung kann sich dadurch auszeichnen, dass der Produktstapel in der vertikalen Lage bewegt wird, zumindest auf einer Teilstrecke der Bewegung. Entlang der Strecke der Bewegung kann die Lage des Produktstapel verändert werden, z.B. durch Schwenken (um eine horizontale Achse) und/oder durch Drehen (um eine vertikale Achse).

Eine Weiterbildung kann sich dadurch auszeichnen, dass der Roboter den Produktstapel von der Schwenkeinrichtung übernimmt und dann bewegt. Das Übernehmen und ebenso ein Halten des Produktstapels kann mit einer Greifeinrichtung des Roboters erfolgen. Das Bewegen kann durch ein Bewegen eines Gelenkarms des Roboters erfolgen. Der Roboter kann zusätzlich in der Horizontalen verschoben werden. Alle Aktionen des Roboters können bevorzugt rechnergesteuert erfolgen.

Eine Weiterbildung kann sich dadurch auszeichnen, dass die Übernahme des Produktstapels im Falle des Wendens von einer Seite des Produktstapels her erfolgt und dass die Übernahme des Produktstapels im Falle des Nichtwendens von der gegenüberliegenden Seite des Produktstapels her erfolgt. Das Übernehmen von der einen oder der anderen Seite her kann mit einem Gelenkarm des Roboters durchgeführt werden. Eine Greifeinrichtung des Roboters kann dabei derart gedreht werden, dass ein Greifen von der einen Seite oder von der andren Seite her erfolgt. Die Auswahl der Seite kann rechnergesteuert erfolgen. Dabei kann ein vorgegebenes Absetzschema berücksichtigt werden.

Eine Weiterbildung kann sich dadurch auszeichnen, dass das Schwenken um den effektiven Winkel α2 während des Bewegens oder zwischen zwei Teilbewegungen oder nach dem Bewegen erfolgt. Das Schwenken kann rechnergesteuert erfolgen. Dabei kann ein vorgegebenes Absetzschema berücksichtigt werden.

Eine Weiterbildung kann sich dadurch auszeichnen, dass das Schwenken um den effektiven Winkel α2 mit dem Roboter erfolgt. Das Schwenken kann durch entsprechendes Bewegen eines Gelenkarms des Roboters erfolgen und/oder kann durch eine Schwenkeinrichtung am Roboter bzw. an dessen Gelenkarm und/oder durch eine schwenkbare Greifeinrichtung am Roboter bzw. an dessen Gelenkarm erfolgen. Das Schwenken kann rechnergesteuert erfolgen.

Eine Weiterbildung kann sich dadurch auszeichnen, dass der Produktstapel beim Schwenken um den effektiven Winkel α2 in eine horizontale Lage zurückgeschwenkt wird. Der Produktstapel wird in diesem Fall nicht gewendet, d.h. ungewendet abgelegt.

Eine Weiterbildung kann sich dadurch auszeichnen, dass der Produktstapel in der horizontalen Lage abgelegt wird. Das Ablegen erfolgt bevorzugt auf eine Palette. Zum Ablegen können Greifer am Roboter gleichzeitig oder nacheinander geöffnet und seitlich weggefahren werden.

Eine Weiterbildung kann sich dadurch auszeichnen, dass der Produktstapel vor dem Ablegen um eine vertikale Achse gedreht wird. Hierdurch kann die Ausrichtung des Produktstapels in der Horizontalen verändert werden, z.B. um effektiv 90° oder 180°. Das Drehen kann rechnergesteuert erfolgen. Dabei kann ein vorgegebenes Absetzschema berücksichtigt werden.

Eine Weiterbildung kann sich dadurch auszeichnen, dass der effektive Winkel α1 = 90° ist und der effektive Winkel α2 = 90° ist und dass um α2 weitergeschwenkt wird. Beim Weiterschwenken erfolgt das Schwenken um α1 und das Schwenken um α2 bevorzugt in dieselbe Schwenkrichtung. Der Produktstapel wird hierbei "in Summe" gewendet.

Eine Weiterbildung kann sich dadurch auszeichnen, dass der effektive Winkel α1 = 90° ist und der effektive Winkel α2 = -90° ist und dass um α2 zurückgeschwenkt wird. Beim Zurückschwenken erfolgt das Schwenken um α1 und das Schwenken um α2 bevorzugt in entgegengesetzte Schwenkrichtungen. Der Produktstapel wird hierbei "in Summe" nicht gewendet.

Eine Weiterbildung kann sich dadurch auszeichnen, dass der Produktstapel während des Bewegens von wenigstens zwei Greifern gehalten wird.

Eine Weiterbildung kann sich dadurch auszeichnen, dass der Produktstapel während des Bewegens formschlüssig und/oder kraftschlüssig gehalten wird.

Eine Weiterbildung kann sich dadurch auszeichnen, dass eine Seite des Produktstapels wenigstens vier Ecken aufweist und dass der Produktstapel während des Bewegens an sich diagonal gegenüberliegenden Ecken gehalten wird. Bei mehr als vier Ecken können z.B. solche Ecken ausgewählt werden, welche einen großen Abstand zueinander haben und/oder in guter Näherung sich diagonal gegenüber liegen.

Eine Weiterbildung kann sich dadurch auszeichnen, dass wahlweise zwei sich diagonal gegenüberliegende Ecken oder zwei andere sich diagonal gegenüberliegende Ecken gehalten werden. Die Auswahl der Ecken kann rechnergesteuert erfolgen. Dabei kann ein vorgegebenes Absetzschema berücksichtigt werden. Hierzu wird eine Greifeinrichtung am Roboterarm bevorzugt gedreht.

Der Produktstapel kann aus gefalzten Papierbogen gebildet sein.

### Spezielle Weiterbildungen hinsichtlich des Greifens

Im Folgenden werden weitere bevorzugte Weiterbildung der Erfindung (kurz: Weiterbildungen) beschrieben.

Eine Weiterbildung kann sich dadurch auszeichnen, dass zwei Greifer zum Einsatz kommen und dass beim Ablegen bzw. Absetzen des Produktstapels die Greifer in der Horizontalen in zwei senkrecht zu einander liegenden Richtungen vom Produktstapel entfernt werden.

Eine Weiterbildung kann sich dadurch auszeichnen, dass beim Ablegen bzw. Absetzen des Produktstapels die Greifer in der Vertikalen öffnen. Dabei kann eine Greiferbacke des Greifers bewegt werden, bevorzugt kann eine oberhalb des Produktstapels befindliche Greiferbacke nach oben bewegt werden. Die andere Greiferbacke, bevorzugt jene unterhalb des Produktstapels, kann unbewegt sein.

Eine Weiterbildung kann sich dadurch auszeichnen, dass jeder Produktstapel zu einer jeweils derart ausgewählten Absetzposition des Absetzschemas bewegt wird, dass in der Absetzposition die Greifer kollisionsfrei zu bereits abgesetzten Produktstapeln in der Horizontalen vom Produktstapel entfernt werden.

### Weiterbildungen

Im Folgenden werden weitere bevorzugte Weiterbildung der Erfindung (kurz: Weiterbildungen) beschrieben.

Eine Weiterbildung kann sich dadurch auszeichnen, dass das Bewegen des Produktstapels von einer Auslage einer Weiterverarbeitungsmaschine für Druckprodukte zu einer Palette oder zu einer von mehreren Paletten erfolgt. Im letzteren Fall ist ein Non-Stop-Betrieb möglich.

Eine Weiterbildung kann sich dadurch auszeichnen, dass das Bewegen des Produktstapels von einer Auslage einer Weiterverarbeitungsmaschine für Druckprodukte, z.B. einer Falzmaschine, einem Sammelhefter oder einem Klebebinder, zu einer Palette oder zu einer von mehreren Paletten erfolgt.

Eine Weiterbildung kann sich dadurch auszeichnen, dass die Produktstapel in der Auslage in eine Transportrichtung transportiert werden und in der Transportrichtung voneinander separiert werden. Der Transport kann auf einem Rollenförderer erfolgen. Zum Separieren können einzelne antreibbare Rollen entsprechend angetrieben oder gestoppt werden.

Eine Weiterbildung kann sich dadurch auszeichnen, dass der Roboter verschiebbar und an mehreren Positionen einer einzelnen Weiterverarbeitungsmaschine oder an mehreren Weiterverarbeitungsmaschinen einsetzbar ist. Der Roboter kann hierzu auf Rollen und/oder Schienen gelagert sein.

Eine Weiterbildung kann sich dadurch auszeichnen, dass der Produktstapel von gefalzten und/oder gestanzten Druckprodukten gebildet ist.

Eine Weiterbildung kann sich dadurch auszeichnen, dass mehrere Produktstapel - horizontal versetzt zueinander - und in mehreren horizontalen Ebenen übereinander zu einem Transportstapel auf einer Transportpalette übereinandergestapelt werden bzw. dass ein Transportstapel entsprechend gebildet oder aufgebaut wird. Die Auswahl des Versatzes und/oder der Ebenen kann rechnergesteuert erfolgen. Dabei kann ein vorgegebenes Absetzschema berücksichtigt werden.

Eine Weiterbildung kann sich dadurch auszeichnen, dass ein am Roboter angeordneter Sensor die Höhe des Transportstapels erfasst. Der Sensor kann an einer Greifeinrichtung des Roboters angeordnet sein. Es können mehrere Sensoren angeordnet sein. Die Höhe kann absolut bestimmt werden, z.B. gemessen von der Oberkante einer Palette oder des Bodens, oder relativ als Abstand zum Sensor bestimmt werden.

Eine Weiterbildung kann sich dadurch auszeichnen, dass als Höhe ein einzelner Höhenwert, eine Menge von Höhenwerten an verschiedenen horizontalen Positionen oder ein Höhenprofil erfasst wird.

Eine Weiterbildung kann sich dadurch auszeichnen, dass als Sensor ein Abstandssensor zum Messen der Höhe oder eine Kamera mit digitaler Bildverarbeitung zur Berechnung der Höhe aus dem Kamerabild verwendet wird.

Eine Weiterbildung kann sich dadurch auszeichnen, dass der Roboterarm kollisionsfrei über einen erst teilweise aufgebauten Transportstapel bewegt wird, wobei der Digitalrechner die erfasste Höhe bei der Steuerung der Bewegung des Roboterarms berücksichtigt.

Eine Weiterbildung kann sich dadurch auszeichnen, dass der Roboter einzelne Zwischenlagen von einem Stapel abnimmt und auf jeweiligen Ebenen ablegt. Die Zwischenlagen können aus Karton sein. Das Ablegen von Zwischenlagen kann rechnergesteuert erfolgen. Dabei kann ein vorgegebenes Absetzschema und/oder Stapelschema berücksichtigt werden.

Eine Weiterbildung kann sich dadurch auszeichnen, dass die Zwischenlage saugend gehalten wird. Hierzu kann ein Sauggreifer an einer Greifeinrichtung des Roboters angeordnet sein. Es können mehrere solcher Sauggreifer zum Einsatz kommen.

Eine Weiterbildung kann sich dadurch auszeichnen, dass das Bewegen vollautomatisch, in Abhängigkeit eines ausgewählten Absetzschemas und/oder Stapelschemas und in Abstimmung mit der Produktionsgeschwindigkeit wenigstens der Weiterverarbeitungsmaschine erfolgt.

Eine Weiterbildung kann sich dadurch auszeichnen, dass das Bewegen des Roboterarms innerhalb einer geschützten Zone erfolgt.

Eine Weiterbildung kann sich dadurch auszeichnen, dass zur Errichtung der geschützten Zone ein Gehäuse und/oder ein Zaun und/oder eine Lichtschranke und/oder eine Kameraüberwachung verwendet wird.

### Ausführungsbeispiele

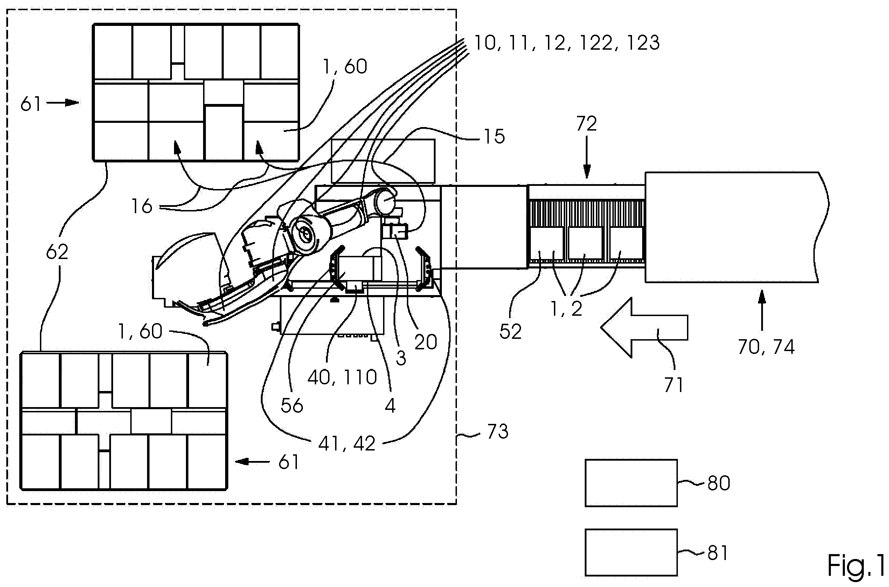

Die Figuren 1 bis 8 zeigen bevorzugte Ausführungsbeispiele der Erfindung und der Weiterbildungen. Einander entsprechende Merkmale sind in den Figuren mit denselben Bezugszeichen versehen. Sich in den Figuren wiederholende Bezugszeichen wurden der Übersichtlichkeit wegen teils weggelassen.

Figur 1 zeigt ein bevorzugtes Ausführungsbeispiel einer Vorrichtung, umfassend einen Roboter, bei der Durchführung von Schritten einer bevorzugten Ausführungsform des erfindungsgemäßen Verfahrens. Gezeigt ist eine Ansicht von oben.

Eine nur teilweise dargestellte Weiterverarbeitungsmaschine 70 an einer Position 74, bevorzugt eine Falzmaschine, produziert Druckprodukte 2, bevorzugt bedruckte und/oder gefalzte Signaturen 2, welche in Form von Produktstapeln 1 auf einer Auslage 72 in eine Transportrichtung 71 bewegt z.B. gefördert werden. Die Aktion der Auslage, insbesondere das Fördern, kann vom Digitalrechner 80 gesteuert werden. Ein Produktstapel umfasst bevorzugt eine Vielzahl übereinanderliegender Produkte.

Ein Digitalrechner 80, welcher bevorzugt mit einem Netzwerk 81 in Verbindung steht, kann die Weiterverarbeitungsmaschine 70 und optional weitere Maschinen steuern, z.B. Auftragsdaten für die Produktherstellung zur Verfügung stellen. Auftragsdaten können über das Netzwerk bereitgestellt werden.

Die Auslage 72 kann die Produktstapel 1 in eine geschützte Zone 73 bewegen. Ein Roboter 10 kann innerhalb dieser Zone angeordnet sein, welcher bevorzugt einen Gelenkarm 11 mit mehreren Achsen 12, z.B. sechs Achsen, umfasst. Der Roboter kann ein üblicher Industrieroboter sein.

Am Roboter 10, bevorzugt am Ende von dessen Gelenkarm 11 bzw. "Hand", ist eine Greifeinrichtung 20 angeordnet. Die Greifeinrichtung kann Produktstapel 1 ergreifen, halten und im Raum, bevorzugt ausschließlich innerhalb der geschützten Zone, von der Auslage 72 wegbewegen. Die Bewegung 15 bewegt den Produktstapel 1 entlang einer Raumkurve zu einer Transportpalette 62. Dort wird der Produktstapel abgelegt und dabei bevorzugt entsprechend einem Absetzmuster 61 an einer Absetzposition 60 abgesetzt. Bevorzugt können mehrere, vom Roboter erreichbare Paletten vorgesehen sein. Die Bewegung kann mehrere Teilbewegungen 16 umfassen. Zwischen zwei Teilbewegungen kann die Greifeinrichtung z.B. gedreht und/oder geschwenkt werden. Das Drehen und/oder Schwenken kann auch während des Bewegens erfolgen.

Am Ende der Auslage 72 ist bevorzugt eine Schwenkeinrichtung 40 angeordnet. Diese kann die Produktstapel 1 aus der Horizontalen 50 bzw. einer horizontalen Ebene 53 bzw. der horizontalen Lage 52 in die Vertikale 54 bzw. vertikale Ebene 57 bzw. die vertikale Lage 56 schwenken. Die Schwenkeinrichtung kann zwei bevorzugt horizontal bewegliche Ausrichtelemente 41 und/oder Geradstoßer 42 für den Produktstapel umfassen. Diese können als Flächen, z.B. Bleche ausgebildet sein.

Die Aktion, insbesondere die Bewegung 15 und/oder 16, des Roboters 10 und/oder die Aktion, insbesondere das Schwenken, der Schwenkeinrichtung, kann vom Digitalrechner 80 gesteuert werden.

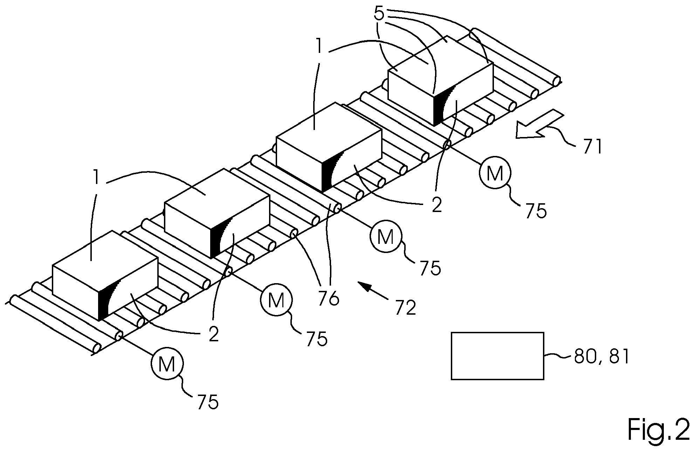

Figur 2 zeigt ein bevorzugtes Ausführungsbeispiel einer Auslage einer Weiterverarbeitungsmaschine. Die Auslage 72 kann eine Vielzahl von Rollen 76 umfassen. Die Auslage kann ein Rollenförderer sein. Einige der Rollen können angetrieben sein, z.B. durch Motoren 75. Der Digitalrechner 80 kann das Fördern der Produktstapel 1 aus übereinander liegenden Produkten 2 steuern. Dabei können die Produktstapel in der Transportrichtung 71 voneinander separiert werden. Die Produkte 2 und somit auch die gebildeten Produktstapel 1 weisen bevorzugt vier Ecken 5 auf. Gestanzte Produkte können auch mehr Ecken aufweisen. Sofern es sich um gefalzte Produkte handelt, liegen deren Falzrücken bevorzugt parallel zur Transportrichtung.

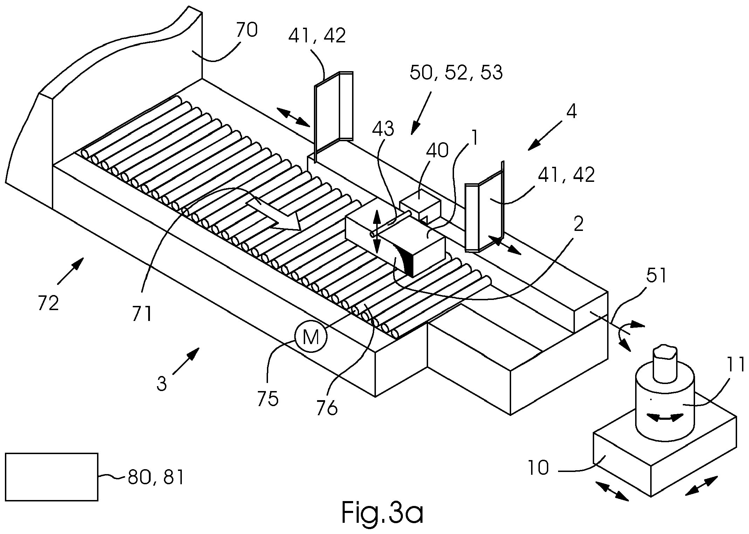

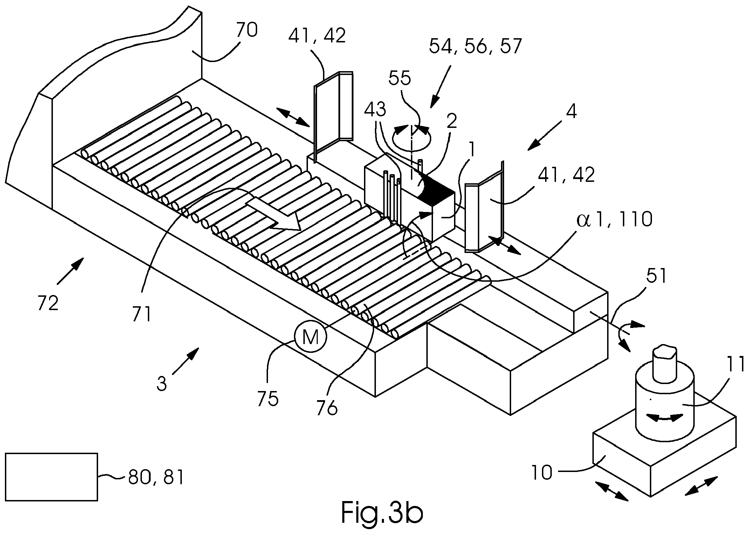

Figuren 3A und 3B zeigen bevorzugte Ausführungsbeispiele der Auslage, umfassend bevorzugt eine Schwenkeinrichtung, bei der Durchführung von Schritten einer bevorzugten Ausführungsform des erfindungsgemäßen Verfahrens. Gezeigt ist jeweils eine Perspektivansicht.

Figuren 3A und 3B zeigen das Ende der Falzmaschine 70 und die Auslage 72, auf welcher die Produktstapel 1 bis zu einer Schwenkeinrichtung 40 in Transportrichtung 71 gefördert werden (Verfahrensschritt Transportieren 101). Die Produktstapel und somit die Produkte 2 befinden sich vor dem Schwenken bevorzugt in horizontaler Lage 52.

Die Schwenkeinrichtung 40 umfasst bevorzugt Greifer 43, z.B. relativ zueinander bewegliche Stangen, bevorzugt eine Stange (schließender "Niederhalter") auf einer Seite des Produktstapels 1 und drei Stangen auf dessen anderer Seite. Die Schwenkeinrichtung und/oder deren Greifer können um eine horizontale Achse 51 geschwenkt werden. Die Greifer, welche sich in Figur 3A unter dem Produktstapel 1 befinden, können zwischen den Rollen 76 positioniert sein und aus dieser Position herausgeschwenkt werden.

Figuren 3A und 3B zeigen ausschnittsweise den Roboter 10 und dessen Gelenkarm 11. Der Roboter ist bevorzugt auf dem Boden in horizontaler Richtung bewegbar und somit an verschiedenen Stellen positionierbar. Der Roboter kann z.B. auf Rollen gelagert sein. Es können z.B. Schienen vorgesehen sein.

Figuren 3A und 3B zeigen die bevorzugt horizontal beweglichen Ausrichtelemente 41 und/oder Geradstoßer 42.

Im Vergleich zwischen den Figuren 3A und 3B wird die Schwenkbewegung bzw. das Schwenken 110 um einen effektiven Winkel α1 deutlich (Verfahrensschritt Schwenken 110). Im gezeigten Beispiel beträgt der Winkel α1 bevorzugt 90°. Der Produktstapel 1 befindet sich nach dem Schwenken bevorzugt in einer vertikalen Lage 56. Bei gefalzten Produkten 2 befinden sich die Falzrücken in der vertikalen Lage bevorzugt oben.

Figuren 3A und 3B zeigen zwei Seiten 3 und 4. Der Roboter 1 kann den geschwenkten Produktstapel 1 bevorzugt von der Seite 3 her oder der gegenüberliegenden Seite 4 her ergreifen. Die Seite 3 kann als Vorderseite und die Seite 4 als Rückseite bezeichnet werden. Die Wahl der Seite kann rechnergesteuert in Abhängigkeit von einem Absetzschema erfolgen.

Die Schwenkeinrichtung kann optional drehbar ausgeführt sein und somit um eine vertikale Achse 55 gedreht werden. Der Produktstapel kann bevorzugt um 180° gedreht werden. Bei dieser Option kann der Roboter 1 den geschwenkten Produktstapel 1 immer von derselben Seite her ergreifen, bevorzugt von der Seite 3 bzw. der Vorderseite her.

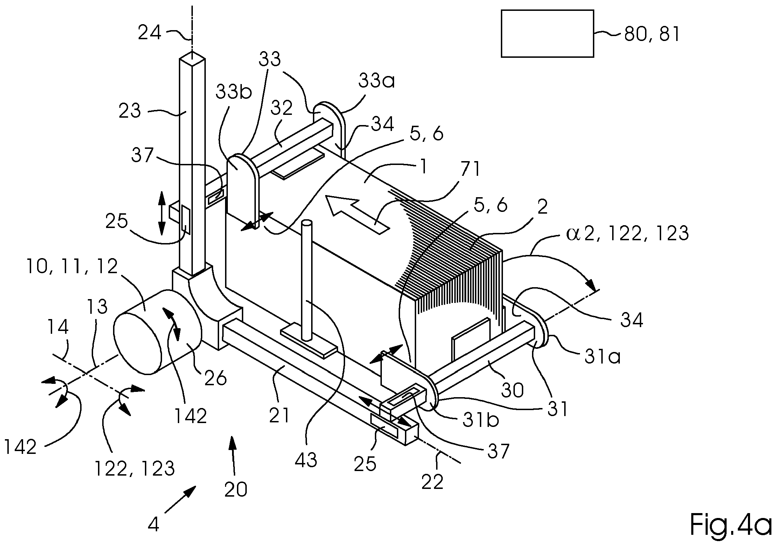

Figuren 4A bis 4D zeigen bevorzugte Ausführungsbeispiele einer robotergeführten Greifeinrichtung bei der Durchführung von Schritten einer bevorzugten Ausführungsform des erfindungsgemäßen Verfahrens. Gezeigt ist jeweils eine Perspektivansicht.

Figuren 4A bis 4D zeigen einen Flansch 26 des Roboters 10. Die Greifeinrichtung 20 für Produktstapel 1 ist bevorzugt am Flansch angeordnet. Die Greifeinrichtung ist bevorzugt um eine Drehachse 13 drehbar (Verfahrensschritt Drehen 142). Die Greifeinrichtung ist bevorzugt um eine Schwenkachse 14 schwenkbar (Verfahrensschritt Weiterschwenken 122 oder Zurückschwenken 123). Sowohl die Drehachse als auch die Schwenkachse können jeweils durch nur eine Achse 12 des Roboters verwirklicht sein oder durch jeweils mehrere Achsen.

Die Greifeinrichtung 20 umfasst bevorzugt zwei Tragarme: einen ersten Tragarm 21 und einen zweiten Tragarm 23. Die Tragarme stehen bevorzugt senkrecht zueinander. Am ersten Tragarm ist ein erster Greifer 30 bevorzugt in eine erste Längsrichtung 22 beweglich angeordnet. Am zweiten Tragarm ist ein zweiter Greifer 32 bevorzugt in eine zweite Längsrichtung 24 beweglich angeordnet. Die Greifer können für deren formatabhängige Verstellung von Linearantrieben 25 angetrieben sein.

Der erste Greifer 30 umfasst bevorzugt ein erstes Paar Greiferbacken 31 mit einem unbeweglichen Greiferbacken 31a und einem beweglichen Greiferbacken 31b. Der bewegliche Greiferbacken kann von einem Linearantrieb 37 angetrieben sein. Der zweite Greifer 32 umfasst bevorzugt ein zweites Paar Greiferbacken 33 mit einem unbeweglichen Greiferbacken 33a und einem beweglichen Greiferbacken 33b. Der bewegliche Greiferbacken kann von einem Linearantrieb 37 angetrieben sein. Die unbeweglichen Greiferbacken können jeweils ein Auflageelement 34, bevorzugt eine Auflagefläche, umfassen. Die beweglichen Greiferbacken dienen dem Öffnen und Schließen der Greifer.

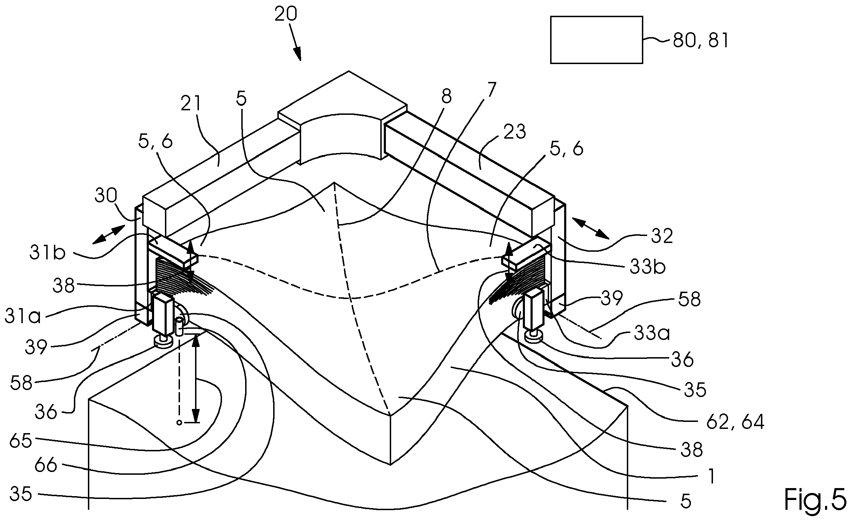

Die Greifer 30 und 32 ergreifen den Produktstapel 1 aus Produkten 2 bevorzugt an dessen Ecken 5 und besonders bevorzugt an sich diagonal (siehe Diagonale 7 in Figur 5) gegenüberliegenden Ecken 6.

Im gezeigten Beispiel der Figur 4A ergreift die Greifeinrichtung 20 den in die vertikale geschwenkten Produktstapel 1 von der Seite 4 her, also z.B. von der Rückseite her. Mit anderen Worten: Die Greifeinrichtung befindet sich beim Ergreifen des Produktstapels bevorzugt auf der Seite 4. Um dies zu verdeutlichen, ist die Transportrichtung 71 eingezeichnet.

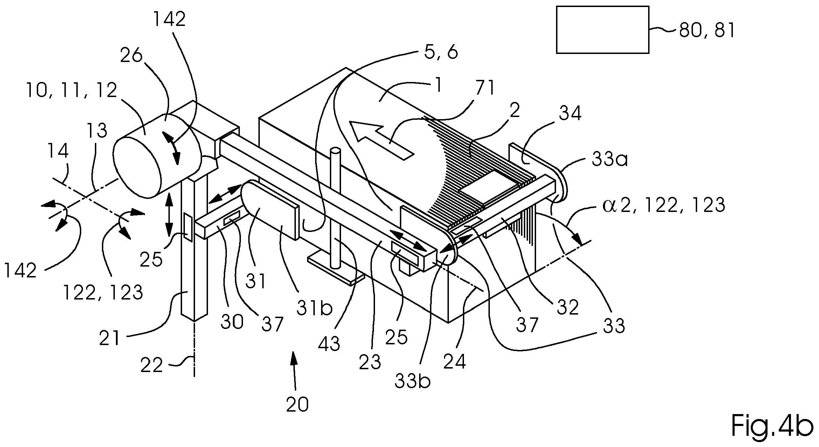

Im gezeigten Beispiel der Figur 4B ergreift die Greifeinrichtung 20 den in die vertikale geschwenkten Produktstapel 1 ebenfalls von der Seite 4 her, also z.B. von der Rückseite her.

Im Vergleich zwischen den Figuren 4A und 4B wird deutlich, dass entweder das eine Paar Ecken 5 ("links oben" und "rechts unten") oder das andere Paar Ecken 5 ("links unten" und "rechts oben") ergriffen werden können. Die Wahl der Ecken kann rechnergesteuert und in Abhängigkeit von einem Ansetzschema getroffen werden.

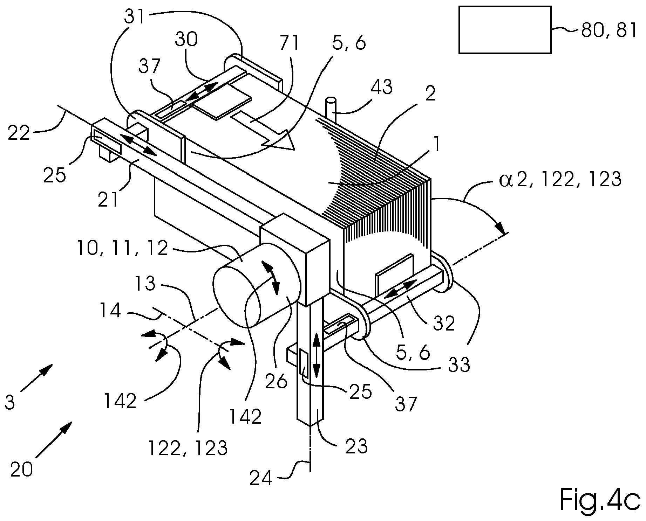

Im gezeigten Beispiel der Figur 4C ergreift die Greifeinrichtung 20 den in die vertikale geschwenkten Produktstapel 1 von der Seite 3 her, also z.B. von der Vorderseite her.

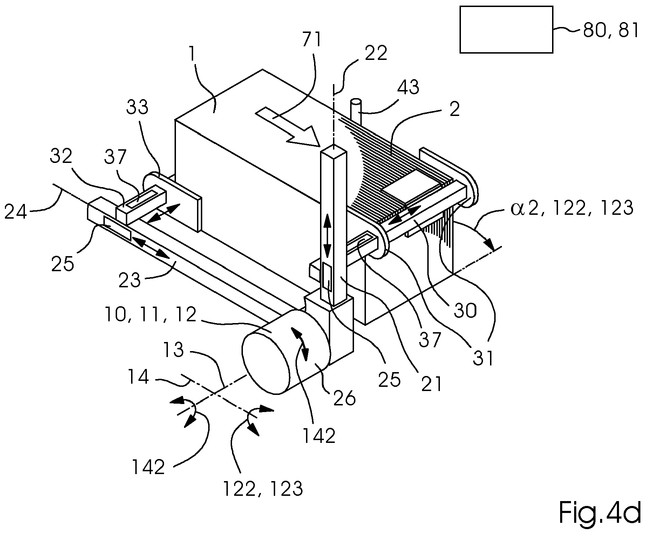

Im gezeigten Beispiel der Figur 4D ergreift die Greifeinrichtung 20 den in die vertikale geschwenkten Produktstapel 1 ebenfalls von der Seite 3 her, also z.B. von der Vorderseite her.

Im Vergleich zwischen den Figuren 4C und 4D wird wiederum deutlich, dass sowohl das eine Paar Ecken 5 ("links oben" und "rechts unten") als auch das andere Paar Ecken 5 ("links unten" und "rechts oben") ergriffen werden können. Die Wahl der Ecken kann wiederum rechnergesteuert und in Abhängigkeit von einem Absetzschema getroffen werden.

Ob der Produktstapel 1 von der Seite 3 oder von der Seite 4 her ergriffen wird und ob dabei das eine Paar Ecken 5 oder das andere Paar Ecken 5 ergriffen wird, hängt davon ab, wie der Produktstapel abgelegt werden soll: ob er gewendet oder ungewendet und ob er gedreht oder ungedreht abgelegt werden soll. Dies wiederum hängt von einem ausgewählten Absetzschema und der jeweiligen Absetzposition innerhalb des Schemas ab. Der Digitalrechner 80 steuert das Ergreifen und somit die passende Aktion des Roboters 10 entsprechend dem Absetzschema und der Absetzposition. Dabei werden die Seite und die Ecken entsprechend gewählt.

Nach dem Ergreifen und während des Bewegens 130, insbesondere zwischen zwei Teilbewegungen 130a und 130b, und bevorzugt vor dem Ablegen (Verfahrensschritt 152) wird der Produktstapel 1 um den effektiven Winkel α2 geschwenkt, entweder weitergeschwenkt (Verfahrensschritt 122) oder zurückgeschwenkt (Verfahrensschritt 123). Durch das Weiterschwenken wird der Produktstapel bevorzugt gewendet abgelegt (Verfahrensschritt Wenden 140); durch das Zurückschwenken bevorzugt ungewendet abgelegt (Verfahrensschritt Nichtwenden 141).

Figur 5 zeigt ein bevorzugtes Ausführungsbeispiel der Greifeinrichtung bei der Durchführung des Schritts "Durchhängenlassen 150 eines Produktstapels" einer bevorzugten Ausführungsform des erfindungsgemäßen Verfahrens. Gezeigt ist eine Perspektivansicht.

In Figur 5 ist die Greifeinrichtung 20 mit den beiden Greifern 30 und 32 gezeigt. Die Greifer halten einen Produktstapel 1 an sich diagonal gegenüberliegenden Ecken 6. Die Greifer sind an den beiden Tragarmen 21 und 23 in Abhängigkeit des Formats des Produktstapels derart positioniert bzw. zueinander beabstandet, dass der Produktstapel durchhängt (Verfahrensschritt Durchhängen lassen 150). Beim Ablegen des Produktstapels auf die Transportpalette 62 oder auf einen bereits gebildeten Transportstapel 64, berührt die durchhängende Diagonale 8 die Palette bzw. den Transportstapel zuerst. Dies erlaubt es, den Produktstapel präzise und störungsfrei abzulegen und die geöffneten Greifer 30 und 32 durch Bewegen in zueinander senkrechte Richtungen 58 vom Produktstapel zu entfernen. Das Öffnen und Entfernen kann der Digitalrechner 80 steuern.

Figur 5 zeigt die beiden unbeweglichen Greiferbacken 31a und 33a mit zwei jeweiligen Anschlagelementen 35, insbesondere Anschlagflächen 35. Während die beiden Auflageelemente 34 (unter dem Produktstapel und daher in der Figur 5 nicht darstellbar) beim Ablegen des Produktstapels 1 bevorzugt horizontal ausgerichtet sind, sind die jeweiligen beiden, also vier, Anschlagelemente bevorzugt vertikal ausgerichtet. Das Öffnen und Schließen der Greifer bzw. die Bewegung der beweglichen Greiferbacken 31b und 33b erfolgt in Richtung 38.

Figur 5 zeigt einen Sensor 66, bevorzugt an einem der unbeweglichen ("unteren") Greiferbacken 31a oder 33a. Dieser kann den Abstand zur Palette oder zum bereits gebildeten Transportstapel bzw. die Höhe 65 messen und den Messwert an den Digitalrechner 80 übermitteln, so dass dieser ein präzises und insbesondere kollisionsfreies Ablegen steuern kann.

Figur 5 zeigt zwei weitere Greifer 36, insbesondere Sauggreifer 36. Diese dienen bevorzugt dem Greifen und Halten von Zwischenlagen 67.

Figur 6A und 6B zeigen bevorzugte Ausführungsbeispiele von Absetzschemata.

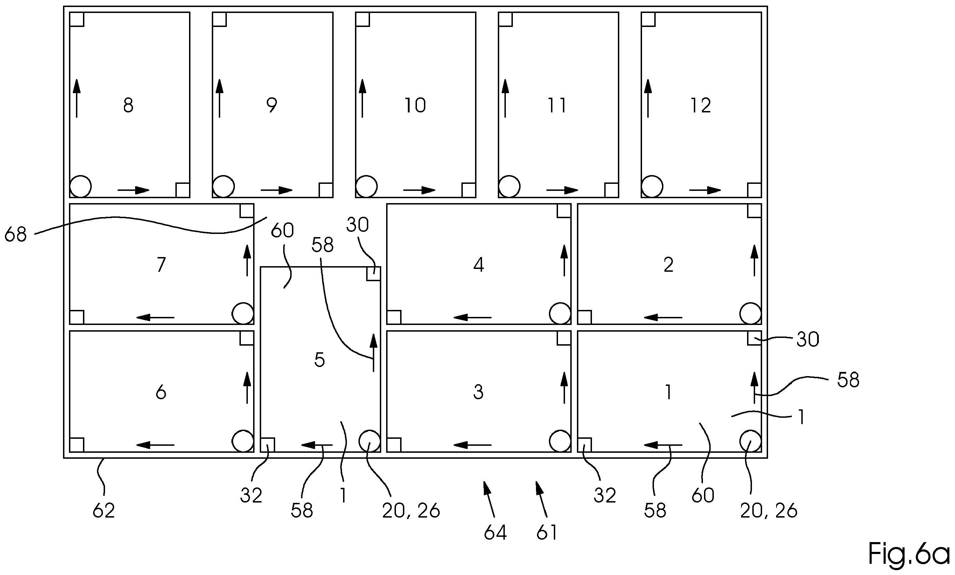

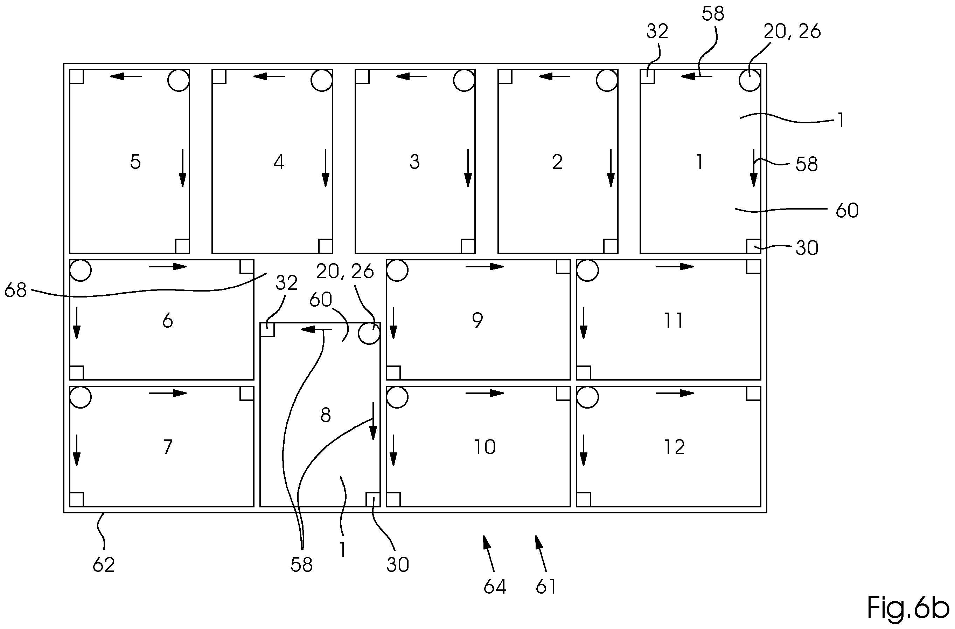

Figur 6A und 6B zeigen beispielhaft je zwölf Produktstapel 1 von oben. Diese wurden in der Reihenfolge 1 bis 12 abgelegt.

An jeweils einer Ecke jedes Produktstapels ist die Greifeinrichtung 20 bzw. der Flansch 26 als Kreis dargestellt. An jeweils zwei Ecken sind die beiden Greifer 30 und 32 dargestellt. Die Pfeile 58 zeigen jeweils die Richtungen, in die die geöffneten Greifer bewegt werden, um den Produktstapel freizugeben.

Das Ablegen der Produktstapel 1 an den Absetzpositionen 60 nach dem jeweils ausgewählten Absetzschema 61 erlaubt es, die Greifer 30 und 32 in der Horizontalen kollisionsfrei zu bereits zuvor abgelegten Produktstapeln zu bewegen.

Wie in den Figuren 6A und 6B erkennbar, kann ein sogenannter "Kamin" 68, eine freie Stelle im Absetzschema, erzeugt werden.

Ein Vergleich der Figuren 6A und 6B lässt erkennen, dass das Absetzschema wechseln kann. Bevorzugt wird das Absetzschema in jeder neuen horizontalen Ebene bzw. Lage eines zu bildenden Transportstapels gewechselt. Hierdurch kann die Stabilität des Transportstapels verbessert werden.

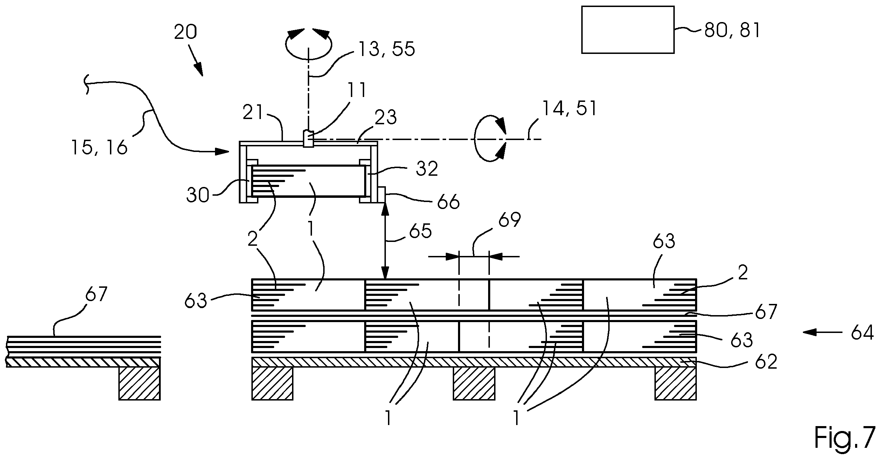

Figur 7 zeigt ein bevorzugtes Ausführungsbeispiel eines durch Schritte "Ablegen" erzeugten Transportstapels. Gezeigt ist eine Seitenansicht.

Auf einer Transportpalette 62 ist eine erste Lage 63 von Produktstapeln 1 entsprechend einem ersten Absetzschema abgelegt. Darüber ist eine Zwischenlage 67 abgelegt. Die Zwischenlagen können vom Roboter von einem benachbarten Zwischenlagenstapel entnommen werden. Hierzu können die Sauggreifer 36 verwendet werden. Auf der Zwischenlage ist eine zweite Lage 63 von Produktstapeln 1 entsprechend dem zweiten, bevorzugt zum ersten verschiedenen Absetzschema abgelegt. Es ist erkennbar, dass die Kanten der Produktstapel 1 zueinander einen horizontalen Versatz 69 aufweisen können. Auf diese Weise kann die Stabilität des Transportstapels verbessert werden.

Die Greifeinrichtung 20 kann beim Annähern an den Transportstapel 64 mittels des Sensors 66 den vertikalen Abstand 65 messen und der Digitalrechner 80 kann mit diesem Messwert die kollisionsfreie Bewegung der Greifeinrichtung steuern.

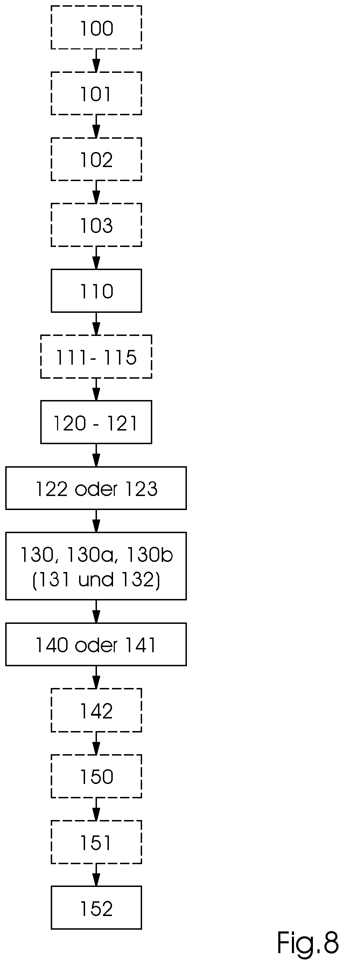

Figur 8 zeigt ein bevorzugtes Ausführungsbeispiel eines Ablaufplanes. Optionale Verfahrensschritte sind gestrichelt dargestellt.

Das Verarbeiten (100) kann das Herstellen von gefalzten Produkten 2 umfassen.

Das Transportieren (101) kann das Transportieren von Produktstapeln 1 in eine Transportrichtung 71 umfassen.

Das Separieren (102) kann das Separieren von Produktstapeln 1 in Transportrichtung 71 umfassen.

Das Anhalten (103) kann das Anhalten des Produktstapels 1 bei einer Schwenkeinrichtung 40 umfassen.

Das Schwenken (110) kann das Schwenken des Produktstapels 1 mit einer Schwenkeinrichtung 40 umfassen, insbesondere um α1 = 90°.

Das Ausrichten (111) kann das Ausrichten des Produktstapel umfassen, bevorzugt um eine vertikale Achse. Hierzu können Ausrichtelemente 41 verwendet werden.

Das Geradstoßen (112) kann das Geradstoßen der Produkte 2 umfassen. Hierzu kann ein Geradstoßer 42 verwendet werden.

Das Rütteln (113) kann das Rütteln des Produktstapels 1 und somit der Produkte 2 umfassen.

Das Belüften (114) kann das Belüften des Produktstapels 1 umfassen. Das Belüften kann durch das Rütteln erfolgen.

Das Verändern (115) kann einen aufgefächerten Produktstapel 1 in einen nicht aufgefächerten Produktstapel verändern. Hierzu können die Ausrichtelemente 41 verwendet werden. Diese können jeweils von einer Fläche, z.B. einem Blech mit zwei Abkantungen gebildet sein.

Das Übernehmen (120) kann mit der Greifeinrichtung 20 und insbesondere mit deren Greifern 30 und 32 erfolgen. Beim Übernehmen kann der Produktstapel von der Schwenkeinrichtung 40 an die Greifeinrichtung 20 übergeben werden. Das Übernehmen kann von der Seite 3 her oder von der Seite 4 her erfolgen.

Das Halten (121) kann mit den geschlossenen Greifern 30 und 32 erfolgen.

Das Weiterschwenken (122) kann mit dem Roboterarm 11 erfolgen, insbesondere um α2 = 90°.

Das Zurückschwenken (123) kann mit dem Roboterarm 11 erfolgen, insbesondere um α2 = -90°.

Es wird bevorzugt in Abhängigkeit von einem Absetzschema entweder weitergeschwenkt oder zurückgeschwenkt.

Das Bewegen bzw. die Bewegung (130) erfolgt bevorzugt unter Einsatz des Roboters 10. Das Teilbewegen bzw. Teilbewegung (130a) und das Teilbewegen bzw. Teilbewegung (130b) erfolgt bevorzugt unter Einsatz des Roboters 10.

Das Berechnen (131) erfolgt bevorzugt unter Einsatz des Digitalrechners 80. Es kann die Bewegung des Roboters 10 berechnet werden.

Das Steuern (132) erfolgt bevorzugt unter Einsatz des Digitalrechners 80. Es kann die Bewegung des Roboters 10 gesteuert werden.

Das Wenden (140) kann mit dem Roboterarm 11 erfolgen, insbesondere um α1+α2 = 180°. Das Nichtwenden (141) kann mit dem Roboterarm 11 erfolgen, insbesondere um α1+α2 = 0°.

Das Drehen (142) kann mit dem Roboterarm 11 erfolgen.

Das Durchhängen lassen (150) kann durch einen einstellbaren Abstand der beiden Greifer 30 und 32 zueinander erreicht werden.

Das Messen (151) des Abstands 65 und/oder der Höhe 65 kann mit dem Sensor 66 erfolgen.

Das Ablegen bzw. Übereinanderstapeln (152) kann mit dem Roboterarm 11 erfolgen. Dabei kann insbesondere ein vorgegebenes Absetzschema 61 berücksichtigt werden.

### Bezugszeichenliste

- 1: Produktstapel
- 2: Druckprodukte, insbesondere gefalzte Druckprodukte
- 3: Seite
- 4: gegenüberliegende Seite
- 5: Ecken
- 6: sich diagonal gegenüberliegende Ecken
- 7: Diagonale
- 8: durchhängende Diagonale

- 10: Vorrichtung, insbesondere Roboter
- 11: Roboterarm bzw. Gelenkarm
- 12: Achsen
- 13: Drehachse
- 14: Schwenkachse
- 15: Bewegung bzw. Strecke
- 16: Teilbewegung bzw. Teilstrecke

- 20: Greifeinrichtung
- 21: erster Tragarm
- 22: erste Längsrichtung
- 23: zweiter Tragarm
- 24: zweite Längsrichtung
- 25: Linearantrieb
- 26: Flansch

- 30: erster Greifer, insbesondere Zangengreifer
- 31: erstes Paar Greiferbacken
- 31a: unbeweglicher Greiferbacken
- 31b: beweglicher Greiferbacken
- 32: zweiter Greifer, insbesondere Zangengreifer
- 33: zweites Paar Greiferbacken
- 33a: unbeweglicher Greiferbacken
- 33b: beweglicher Greiferbacken
- 34: Auflageelement, insbesondere Auflagefläche
- 35: Anschlagelemente, insbesondere zwei Anschlagsflächen
- 36: weiterer Greifer, insbesondere Sauggreifer
- 37: Linearantrieb
- 38: Bewegung beim Öffnen/Schließen der Greifer
- 39: Blaseinrichtung

- 40: Schwenkeinrichtung
- 41: Ausrichtelemente
- 42: Geradstoßer
- 43: Greifer

- 50: Horizontale
- 51: horizontale Achse
- 52: horizontale Lage
- 53: horizontale Ebene
- 54: Vertikale
- 55: vertikale Achse
- 56: vertikale Lage
- 57: vertikale Ebene
- 58: zwei senkrecht zu einander liegende Richtungen

- 60: Absetzposition
- 61: Absetzschema
- 62: Unterlage, insbesondere Palette
- 63: Lage bereits abgesetzter Produktstapel
- 64: Transportstapel
- 65: Höhe
- 66: Sensor, insbesondere Abstandsensor oder Kamera
- 67: Zwischenlage
- 68: Kamin
- 69: Versatz

- 70: Weiterverarbeitungsmaschine, insbesondere Falzmaschine
- 71: Transportrichtung
- 72: Auslage
- 73: geschützte Zone
- 74: Position einer Weiterverarbeitungsmachine
- 75: Antriebe
- 76: Rollen

- 80: Digitalrechner
- 81: Netzwerk

- 100: Verarbeiten
- 101: Transportieren
- 102: Separieren
- 103: Anhalten

- 110: Schwenken
- 111: Ausrichten
- 112: Geradstoßen
- 113: Rütteln
- 114: Belüften
- 115: Verändern

- 120: Übernehmen
- 121: Halten
- 122: Weiterschwenken
- 123: Zurückschwenken
- 130: Bewegen bzw. Bewegung
- 130a: Teilbewegen bzw. Teilbewegung
- 130b: Teilbewegen bzw. Teilbewegung
- 131: Berechnen
- 132: Steuern

- 140: Wenden
- 141: Nichtwenden
- 142: Drehen

- 150: Durchhängen lassen
- 151: Messen
- 152: Ablegen bzw. Übereinanderstapeln

- α1: (erster) effektiver Winkel
- α2: (zweiter) effektiver Winkel

## Patentansprüche

1. Verfahren zum Bewegen eines Produktstapels (1) mit einem Roboter (10), wobei der Roboter (10) einen Gelenkarm (11) und am Gelenkarm angeordnet wenigstens einen Greifer (30, 32) für den Produktstapel (1) umfasst, wobei der Produktstapel (1) wahlweise gewendet wird, wobei das Bewegen (130, 130a, 130b) an einer ausgewählten Absetzposition (60) von mehreren Absetzpositionen (60) eines vorgegebenen Absetzschemas (61) endet und wobei der Produktstapel (1) an der ausgewählten Absetzposition (60) auf eine Unterlage (62) abgesetzt wird,
**dadurch gekennzeichnet,**
**dass** der Produktstapel (1) derart gehalten wird, dass der Produktstapel (1) diagonal
durchhängt (150) und dass beim Absetzen des diagonal durchhängenden Produktstapels (1) zunächst der Durchhang (8) die Unterlage (62) berührt.

2. Verfahren nach Anspruch 1,
**dadurch gekennzeichnet,**
das Absetzschema (61) in einem Digitalrechner (80) gespeichert ist oder über ein Netzwerk (81) von einem anderen Digitalrechner auf den Digitalrechner (81) geladen wird und dass das Bewegen (130, 130a, 130b) durch den Digitalrechner gesteuert wird.

3. Verfahren nach Anspruch 2,
**dadurch gekennzeichnet,**
**dass** das Absetzschema (61) vom Digitalrechner (80) in Abhängigkeit von wenigstens einem der folgenden Parameter berechnet und/oder ausgewählt wird: Abmessungen des Produktstapels (1); Abmessungen der Unterlage (62); im Falle von gefalzten Produkten (2) gebildeter Produktstapel: Lage der Falzkanten relativ zur Unterlage und/oder Aufbau der Falzkanten in Abhängigkeit von der Falzart.

4. Verfahren nach einem der vorhergehenden Ansprüche,
**dadurch gekennzeichnet,**
**dass** nacheinander mehrere Produktstapel (1) bewegt, wahlweise gewendet (140), wahlweise in der Horizontalen gedreht (142) und an jeweils ausgewählten Absetzpositionen (60) von mehreren Absetzpositionen (60) des vorgegebenen Absetzschemas (61) abgesetzt werden.

5. Verfahren nach einem der vorhergehenden Ansprüche,
**dadurch gekennzeichnet,**
**dass** der Produktstapel (1) um einen effektiven Winkel α1 < > 180° geschwenkt (110) wird und dass der Produktstapel (1) anschließend um einen effektiven Winkel α2 = 180° - α1 geschwenkt (122) oder um einen effektiven Winkel α2 = - α1 zurückgeschwenkt (123) wird.

6. Verfahren nach einem der vorhergehenden Ansprüche,
**dadurch gekennzeichnet,**
**dass** zwei Greifer (30, 32) zum Einsatz kommen und dass beim Ablegen bzw. Absetzen (152) des Produktstapels (1) die Greifer(30, 32) in der Horizontalen in zwei senkrecht zu einander liegenden Richtungen (58) vom Produktstapel entfernt werden.

7. Verfahren nach einem der vorhergehenden Ansprüche,
**dadurch gekennzeichnet,**
**dass** wahlweise zwei sich diagonal gegenüberliegende Ecken (6) des Produktstapels (1) oder zwei andere sich diagonal gegenüberliegende Ecken (6) des Produktstapels (1) gehalten werden.

8. Verfahren nach Anspruch 7,
**dadurch gekennzeichnet,**
**dass** die Auswahl der Ecken (6) rechnergesteuert erfolgt.

9. Verfahren nach Anspruch 8,
**dadurch gekennzeichnet,**
**dass** dabei ein vorgegebenes Absetzschema (61) berücksichtigt wird.

10. Verfahren nach einem der vorhergehenden Ansprüche,
**dadurch gekennzeichnet,**
**dass** der Abstand von Greifern (30, 32) des Roboters (10) bis zu einem gewünschten oder vorgegebenen Durchhang rechnergesteuert verringert wird.

## Claims

1. Method of moving a stack (1) of products by means of a robot (10), wherein the robot (10) comprises an articulated arm (11) and at least one gripper (30, 32) for the stack of products (1), the gripper disposed on the articulated arm, wherein the stack (1) of products is selectively turned, wherein the step of moving (130, 130a, 130b) terminates at a selected deposit position (60) among multiple deposit positions (60) of a predefined deposit scheme (61) and wherein the stack (1) of products is deposited on a base (62) at the selected deposit position,
**characterized**
**in that** the stack (1) of products is held in such a way that the stack (1) of products sags diagonally (150) and in that when the stack (1) of products that sags diagonally is deposited, the sagging portion (8) is the first to touch the base (62).

2. Method according to claim 1,
**characterized**
**in that** the deposit scheme (61) is saved on a digital computer (80) or uploaded onto the digital computer (81) from another digital computer via a network (81) and in that the moving step (130, 130a, 130b) is controlled by the digital computer.

3. Method according to claim 2,
**characterized**
**in that** the deposit scheme (61) is calculated and/or selected by the digital computer (80) as a function of at least one of the following parameters: dimensions of the stack (1) of products; dimensions of the base (62); in a case in which the stack of products is formed of folded products (2): position of the folding edges relative to the base and/or structure of the folding edges as a function of the type of fold.

4. Method according to any one of the preceding claims,
**characterized**
multiple stacks (1) of products are successively moved, selectively turned (140), selectively rotated (142) in the horizontal, and deposited at respective selected deposit positions (60) among multiple deposit positions (60) of the predefined deposit scheme (61).

5. Method according to any one of the preceding claims,
**characterized**
**in that** the stack (1) of products is pivoted (110) through an effective angle α1 < > 180° and in that the stack (1) of products subsequently pivoted (122) through an effective angle α2 = 180° - α1 or pivoted back (123) through an effective angle α2 = -α1.

6. Method according to any one of the preceding claims,
**characterized**
**in that** two grippers (30, 32) are used and in that when the stack (1) of products is deposited/set down (152), the grippers (30, 32) are moved away from the stack of products in the horizontal in two directions (58) perpendicular to one another.

7. Method according to any one of the preceding claims,
**characterized**
**in that** selectively two corners (6) facing one another diagonally on the stack (1) of products or two other corners facing one another diagonally on the stack (1) of products are held.

8. Method according to claim 7,
**characterized**
**in that** the selection of the corners (6) is made in a computer-controlled way.

9. Method according to claim 8,
**characterized**
**in that** a predefined deposit scheme (61) is factored into the process.

10. Method according to any one of the preceding claims,
**characterized**
**in that** the distance of grippers (30, 32) of the robot (10) is reduced in a computer-controlled way until a desired or predefined degree of sagging is reached.

## Revendications

1. Procédé pour déplacer une pile de produits (1) avec un robot (10), le robot (10) comprenant un bras articulé (11) et, monté sur le bras articulé, au moins une pince (30, 32) pour la pile de produits (1), la pile de produits (1) pouvant être pivotée facultativement, le déplacement (130, 130a, 130b) se terminant à une position de dépose (60) sélectionnée parmi plusieurs positions de dépose (60) d'un schéma de dépose (61) prédéfini et la pile de produits (1) étant déposée sur un support (62) à la position de dépose (60) sélectionnée, **caractérisé en ce**
**que** la pile de produits (1) est fixée de façon à ce que la pile de produits (1) présente diagonalement un fléchissement (150) et **en ce que**, lors de la dépose de la pile de produits (1) présentant diagonalement un fléchissement, c'est d'abord le fléchissement (8) qui touche le support (62).

2. Procédé selon la revendication 1,
**caractérisé en ce**
**que** le schéma de dépose (61) est mémorisé dans un ordinateur numérique (80) ou est chargé sur l'ordinateur numérique (81) à partir d'un autre ordinateur numérique via un réseau (81) et **en ce que** le déplacement (130, 130a, 130b) est commandé par l'ordinateur numérique.

3. Procédé selon la revendication 2,
**caractérisé en ce**
**que** le schéma de dépose (61) est calculé et/ou sélectionné par l'ordinateur numérique (80) en fonction de l'un au moins des paramètres suivants : dimensions de la pile de produits (1) dimensions du support (62) dans le cas de piles de produits constituées de produits pliés (2) : position des bords pliés par rapport au support et/ou structure des bords pliés en fonction du type de pliage.

4. Procédé selon l'une des revendications précédentes,
**caractérisé en ce**
**que** plusieurs piles de produits (1) sont déplacées l'une après l'autre, facultativement pivotées (140), facultativement pivotées dans le sens horizontal (142) et déposées à des positions de dépose (60) respectivement sélectionnées parmi plusieurs positions de dépose (60) du schéma de dépose (61) prédéfini.

5. Procédé selon l'une des revendications précédentes,
**caractérisé en ce**
**que** la pile de produits (1) est pivotée (110) d'un angle effectif α1 < > 180° et **en ce que** la pile de produits (1) est ultérieurement pivotée (122) d'un angle effectif α2 = 180° - α1 ou est ramenée en arrière (123) d'un angle effectif α2 = - α1.

6. Procédé selon l'une des revendications précédentes,
**caractérisé en ce**
**que** deux pinces (30, 32) sont utilisées et **en ce que**, lors de la dépose ou de la mise en place (152) de la pile de produits (1), les pinces sont retirées de la pile de produits (30, 32) à l'horizontale dans deux directions (58) perpendiculaires l'une à l'autre.

7. Procédé selon l'une des revendications précédentes,
**caractérisé en ce**
**qu'**au choix, deux angles (6) opposés en diagonale de la pile de produits (1) ou deux autres angles (6) F opposés en diagonale de la pile de produits (1) sont maintenus.

8. Procédé selon la revendication 7,
**caractérisé en ce**
**que** la sélection des angles (6) est commandée par ordinateur.

9. Procédé selon la revendication 8,
**caractérisé en ce**
**qu'**il est tenu compte d'un schéma de dépose (61) prédéfini.

10. Procédé selon l'une des revendications précédentes,
**caractérisé en ce**
**que** la distance des pinces (30, 32) du robot (10) 2 est réduite jusqu'à un fléchissement souhaité ou prédéfini, commandé par ordinateur.
